# EUROPEAN PATENT APPLICATION

(11) **EP 3 352 093 A1**
(43) Date of publication of application: **25.07.2018**
(21) Application number: 15903945.2
(22) Date of filing: 09.11.2015
(51) Int. Cl.: G06F 17/30

(54) **METHOD AND SYSTEM FOR PERSONALIZED ASSOCIATION OF VOICES AND PATTERNS**

(30) Priority: 17.09.2015 CN 201510590655
(71) Applicant: Chengdu Yazhishepin Network Technology Co., Ltd., Chengdu, Sichuan 610041 (CN)
(72) Inventor: ZHOU, Peng, Chengdu Sichuan 610041 (CN); YANG, Taoliu, Chengdu Sichuan 610041 (CN); ZHANG, Ke, Chengdu Sichuan 610041 (CN); YANG, Qing, Chengdu Sichuan 610041 (CN); JIA, Haitao, Chengdu Sichuan 610041 (CN); WU, Xiaochuan, Chengdu Sichuan 610041 (CN)
(74) Representative: dompatent von Kreisler Selting Werner - Partnerschaft von Patent- und Rechtsanwälten mbB
(86) International application number: PCT/CN2015/094086
(87) International publication number: WO 2017/045257

(57) **Abstract**

The present invention provides a method for establishing a personalized association between voice and pattern, comprising: acquiring voice data of a user; converting the voice data into a pattern and storing the pattern; and reading the voice data corresponding to a to-be-queried pattern according to a query instruction of the user. The present invention establishes a personalized association relationship between voice and pattern, and takes the pattern corresponding to the voice as a pattern capable of effectively propagated on the Internet. Moreover, the present invention can form a pattern-voice double medium by converting a pattern into a voice, thus improving propagation range and effectiveness.

## Description

### Technical Field

The present invention relates to the technical field of data processing.

### Background

With the development of Internet technology, especially the development of mobile Internet, the combination trend of design, technology and the Internet is becoming more and more frequent and close, and the application prospect is becoming more and more extensive. In particular, with the increase for personalized demands, people will have a strong demand for changing elements.

### Summary of the Invention

In view of the existing status, one objective of the present invention is to provide a method for establishing a personalized association between voice and pattern. In order to have a basic understanding to a few aspects of the disclosed embodiments, a simple summarization is given hereafter. The summarization part is not general comment, and is used neither for determining the key/important constituent elements nor for describing the protection scope of the embodiments. The only purpose is to present a few concepts in a simple form as the preface of the later detailed description.

The present invention provides a method for establishing a personalized association between voice and pattern, comprising: acquiring voice data of a user; converting the voice data into a pattern and storing the pattern; and reading the voice data corresponding to a to-be-queried pattern according to a query instruction of the user.

Preferably, converting the voice data into a pattern comprises: converting the voice data into a binary stream; and representing the binary stream bit by bit with self-defined reference image symbols to form a converted pattern.

Preferably, after the voice data is converted into a binary stream, adopting an encryption algorithm to perform mathematical transformation on the binary stream; and representing a generated code acquired after the mathematical transformation bit by bit with self-defined reference image symbols to form a converted pattern.

Preferably, utilizing reference image symbols to represent a bit comprises: when a bit is represented with stripes, representing 0 and 1 in the binary system with the hop of colors; or when a bit is represented with a pattern in a specific shape, representing 0 and 1 in the binary system with rotation angles of the pattern relative to a reference point.

Preferably, further comprising the execution of the following functions via a Web cloud server: storing the acquired voice data in a high capacity cloud storage medium, and transmitting storage path parameters of the voice and the corresponding pattern thereof to a voice conversion interface; invoking the voice conversion interface to convert the voice into a pattern, and then storing the pattern in the high capacity cloud storage medium; generating entry data of the voice and the corresponding pattern thereof, and updating the entry data to a database system; and receiving a query instruction of the user, acquiring the entry data corresponding to the to-be-queried pattern from the database system, and reading the voice data corresponding to the to-be-queried pattern from the high capacity cloud storage medium according to the entry data.

Preferably, a mobile application program (APP) of a terminal adopts a microphone interface provided by an Android system or an iOS system, or adopts a hypertext markup language 5 (HTML5) technology to acquire the voice data of the user; or a webpage terminal adopts the HTML5 technology or a Flash technology to acquire the voice data of the user.

The embodiment of the present invention further provides a system for establishing a personalized association between voice and pattern, comprising a voice acquisition device, a Web cloud server, a high capacity cloud storage medium, a voice conversion interface and a database system, wherein:
the voice acquisition device is used for acquiring voice data of a user;
the Web cloud server is used for storing the acquired voice data in the high capacity cloud storage medium, transmitting the storage path parameters of the voice and the corresponding pattern thereof to the voice conversion interface, and updating the entry data to the database system;
the voice conversion interface is used for converting the voice into a pattern, and then storing the pattern in the high capacity cloud storage medium; and
the database system is used for storing the entry data of the voice and the corresponding pattern thereof.

Preferably, the voice conversion interface is compiled in a dynamic link library form, and supplies two interfaces to the external, wherein:
a first interface is used for generating unique file names for a voice file and a corresponding pattern file thereof;
a second interface is used for converting the voice data into a binary stream, representing the binary stream bit by bit with self-defined reference image symbols to form a converted pattern, and storing the converted pattern in the high capacity cloud storage medium.

Preferably, the first interface is used for converting the voice data into a binary stream, adopting an encryption algorithm to perform mathematical transformation, generating a generated code, and using the generated code to name the voice file and the corresponding pattern file thereof. The second interface is used for representing the generated code acquired after the mathematical transformation bit by bit with self-defined reference image symbols to form a converted pattern.

Preferably, the second interface utilizing reference image symbols to represent a bit comprises:
when a bit is represented with a stripe, representing 0 and 1 in the binary system with the hop of colors; or
when a bit is represented with a pattern in a specific shape, representing 0 and 1 in the binary system with rotation angles of the pattern relative to a reference point.

Preferably, the voice acquisition device adopts a microphone interface provided by an Android system or an iOS system, or adopts a hypertext markup language HTML5 technology to acquire the voice data of the user via a mobile application program of a terminal; or

The voice acquisition device adopts the HTML5 technology or a Flash technology to acquire the voice data of the user via a webpage terminal.

For the above-described or relevant purpose, one or more embodiments comprise the features which will be elaborated hereafter and specifically pointed out in the claims. The description hereafter and the drawings elaborate certain illustrative aspects which are only a few of various modes the principles of the embodiments can utilize. The other benefits and novel features will become apparent with the elaboration of the present invention hereafter in connection with the drawings. The disclosed embodiments are intended to comprise the above-described aspects and the equivalences thereof.

### Description of the Drawings

Fig. 1 is a flow chart of the method for establishing a personalized association between voice and pattern according to an embodiment of the present invention;
Fig. 2 is a schematic view of a pattern formed by using stripes as reference image symbols according to an embodiment of the present invention; and
Fig. 3 is a block diagram of the system for establishing a personalized association between voice and pattern according to an embodiment of the present invention.

### Detailed Description of the Embodiments

The following description and the drawings fully illustrate the specific embodiments of the present invention, such that a person skilled in the art can implement same. The other embodiments may comprise structural, logical, electrical, process, and other modifications. The embodiments represent possible variations only. Unless explicitly required, separate assemblies and functions are optional, and the operation order thereof is variable. A part and the features of one embodiment may be contained in or replace a part and the features of another embodiment. The scope of the embodiment of the present invention comprises the entire scope of the claims, and all available equivalences of the claims. In the present text, the embodiments of the invention may be separately or generally represented with the term "invention", which is merely for convenience. And if in fact, more than one inventions are disclosed, it is not intended to automatically limit the scope of the application to any single invention or inventive concept.

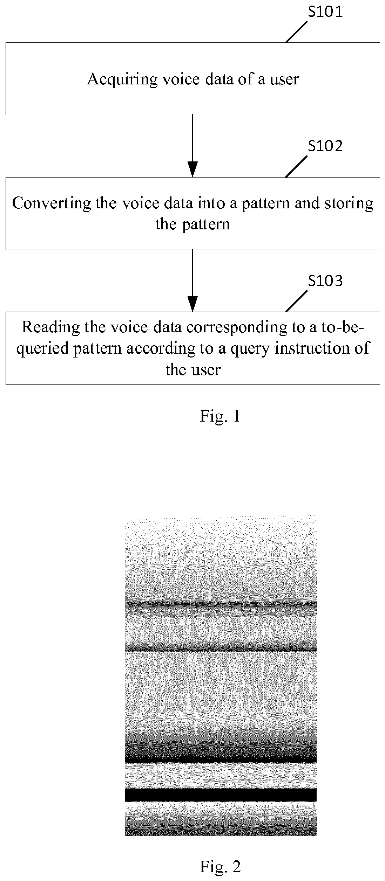

The applicant finds out through research that: sound is the most special recognition mode of people and animals; and if sound is converted into a pattern, not only the purpose of being unique and attractive can be achieved, but also the purpose of convenient propagation can be achieved. Therefore, the embodiment of the present invention provides a method for establishing a personalized association between voice and pattern. As shown in Fig. 1, the method comprises the steps of:
Step S101, acquiring voice data of a user;
Step S102, converting the voice data into a pattern and storing the pattern; and
Step S103, reading the voice data corresponding to a to-be-queried pattern according to a query instruction of the user.

The present invention establishes a personalized association relationship between voice and pattern, and takes the pattern corresponding to the voice as a pattern capable of effectively propagated on the Internet. Moreover, the present invention can form a pattern-voice double medium by converting a pattern into a voice, thus improving propagation range and effectiveness.

Wherein a voice-pattern conversion algorithm involved in step S102 comprises: converting the voice data into a binary stream; and representing the binary stream bit by bit with self-defined reference image symbols to form the pattern. The unique pattern generated on the basis of the reference image symbols in connection with encoding information can be used for marking or identification.

With regard to the convertible reference image symbols involved in the present technology, the use of the symbols is a convenient propagation mode. The reference image symbols can be self-defined. Hence, a personalized customization solution can be provided for a user.

Wherein the reference image symbols can be determined according to the requirements for practical application, and can be designed by a designer according to an application scenario in connection with the consistent style of a product, which is not limited by the present invention.

In one specific embodiment, as shown in Fig. 2, a stripe can be used as a reference image symbol, wherein the stripe has a unique style owing to the color selection and arrangement sequence thereof. In the design of the reference image symbol, when a bit is represented with a stripe, the 0 and 1 in the binary system can be represented with the hop of colors. The embodiment of the present invention only takes black and white as an example. Further, the stripe can also be a colorful stripe, and can also be designed with various color selections and arrangement sequences.

In another embodiment, a plane pattern in a specific shape can also act as the reference image symbol. When a bit is represented with a pattern in a specific shape, the 0 and 1 in the binary system can be represented with rotation angles of the pattern relative to a reference point.

Preferably, when the self-defined reference image symbols are used to represent the binary stream bit by bit, the binary stream can be represented in an order from a high bit to a low bit, or from a low bit to a high bit.

Preferably, an encryption algorithm can be further adopted to perform mathematical transformation on the binary stream; and a generated code acquired after the mathematical transformation can be represented bit by bit with the self-defined reference image symbols to form a pattern which can be effectively propagated on Internet. Since the pattern represents a series of unique encryption algorithm codes, the pattern has the function of an anti-counterfeit label, and relevant product information can be read therefrom via a parsing device.

The encryption algorithm can be the message-digest algorithm 5 (MD5), the Secure Hash algorithm (SHA), the Hashed message authentication code (HMAC) and the like.

In addition, the present invention further relates to a voice recording technology, providing two voice recording modes: webpage terminal and mobile application program (APP). The mobile application program can adopt the hypertext markup language 5 HTML5 technology or a microphone interface provided by an Android system or an iOS system to acquire the voice data of the user. Alternatively, a webpage terminal can adopt the HTML5 technology or a Flash technology to acquire the voice data of the user.

Preferably, the acquired voice data is stored in a high capacity cloud storage medium in a Web cloud server manner. The high capacity cloud storage medium facilitates the extension and management at the later stage. Storage path parameters of the voice and the corresponding pattern thereof is transmitted to a voice conversion interface via the Web cloud server; the voice conversion interface is invoked to convert the voice into a pattern, and then stores the pattern in the high capacity cloud storage medium; the entry data of the voice and the corresponding pattern thereof is generated and updated to a database system, wherein the entry data comprises at least a storage path and user information.

In one embodiment, the voice conversion interface is compiled in a dynamic link library (.dll) form, and supplies two interfaces to the external, wherein:
A first interface is used for generating unique file names for a voice file and a corresponding pattern file thereof;
A second interface is used for converting the voice data into a binary stream, representing the binary stream bit by bit with self-defined reference image symbols to form a converted pattern, and storing the converted pattern in the high capacity cloud storage medium.

In another embodiment, a solution for generating an encrypted pattern file is provided, wherein:
The first interface is used for converting the voice data into a binary stream, adopting an encryption algorithm to perform mathematical transformation, and generating a generated code to name the voice file and the corresponding pattern file thereof. The generated code acquired through the encryption algorithm is unique, and thus can uniquely name the voice file and the corresponding pattern file thereof.

The second interface is used for representing the generated code acquired after the mathematical transformation bit by bit with self-defined reference image symbols to form a converted pattern. Since a pattern represents a series of unique encryption algorithm codes, the pattern has the function of an anti-counterfeit label, and relevant product information can be read therefrom via a parsing device.

The MD5 encryption algorithm will be taken as an example hereafter to describe how to realize a voice conversion interface in a .dll file format, compile the function in a dynamic link library manner, and supply two interfaces to the external:

### 1. const char* voice2MD5(char* voiceUrl);

The effect of the function is to generate an MD5 code via a voice file uploaded by a user, and use the MD5 code to name the voice file.

### 2. int voiceToImg(char* imgUrl, char* voice2MD5, char* userID, char* remark);

The effect of the function is to convert a voice into a pattern, and store the pattern in the high capacity cloud storage medium, wherein the file name thereof is also the MD5 code generated by the voice file, and the postfix is ".bmp".

The file name uses the generated MD5 code, thus improving the search access speed when a large quantity of files is searched, while ensuring the name format of the file name to be uniform; and furthermore, whether file content is matched with the file name can be detected.

Preferably, the entry data stored in the database system can be designed as follows:

**Table 1**

| Name | Description | Data type | Length |
|---|---|---|---|
| voice_id | Serial number (primary key) | int | 10 |
| user_id | User ID | int | 10 |
| date | Create time | datetime | 0 |
| data_to_MD5 | MD5 code generated by the voice file | varchar | 32 |
| order_id | Generated order number | int | 11 |
| data_type | Voice data type | int | 1 |
| remark | Remark () | varchar | 1024 |
| voice_data_url | Voice storage position | varchar | 1024 |
| voice_to_img_url | Image storage position | varchar | 1024 |

The user can read relevant information from a remote cloud database server via a unique pattern, read original voice information from a relevant position in the high capacity cloud storage medium, and perform reverse conversion to restore the pattern into a voice, thus facilitating the storage and propagation of information in voice and pattern modes.

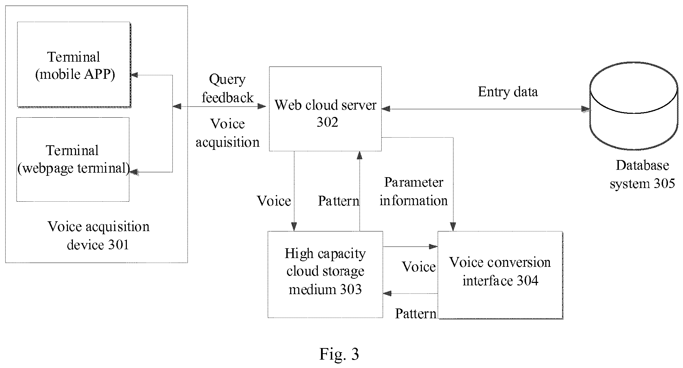

To realize the method for establishing a personalized association between voice and pattern, the present invention further provides a system for establishing a personalized association between voice and pattern, as shown in Fig.3, comprising a voice acquisition device 301, a Web cloud server 302, a high capacity cloud storage medium 303, a voice conversion interface 304 and a database system 305, wherein:
The voice acquisition device 301 is used for acquiring voice data of a user;
The Web cloud server 302 is used for storing the acquired voice data in the high capacity cloud storage medium 303, transmitting storage path parameters of the voice and the corresponding pattern thereof to the voice conversion interface 304, and updating entry data to the database system 305;
The voice conversion interface 304 is used for converting the voice into a pattern, and then storing the pattern in the high capacity cloud storage medium 303; and
The database system 305 is used for storing the entry data of the voice and the corresponding pattern thereof.

Wherein the voice acquisition device 301 can provide two modes: one is a mobile APP mode, and the other one is a webpage terminal mode. In the mobile APP mode, a mobile application program of a terminal can adopt a microphone interface provided by an Android system or an iOS system, or adopt a hypertext markup language HTML5 technology to acquire the voice data of the user. In the webpage terminal mode, a webpage terminal can adopt the HTML5 technology or a Flash technology to acquire the voice data of the user.

The Web cloud server 302 provides an interaction platform for the user to issue a query instruction via the mobile APP or the webpage terminal; the remote cloud database server 302 acquires entry data corresponding to a to-be-queried pattern from the database system 305 according to the query instruction, and reads the voice data corresponding to the to-be-queried pattern from the high capacity cloud storage medium 303 according to the entry data, and transmits the voice data to the user.

In one embodiment, the voice conversion interface 304 can convert the voice data into a binary stream, and represent the binary stream bit by bit with self-defined reference image symbols to form a converted pattern.

Specifically, the voice conversion interface 304 can be compiled in a dynamic link library form, and supplies two interfaces to the external, wherein:
A first interface is used for generating unique file names for a voice file and a corresponding pattern file thereof;
A second interface is used for converting the voice data into a binary stream, representing the binary stream bit by bit with self-defined reference image symbols to form a converted pattern, and storing the converted pattern in the high capacity cloud storage medium.

In another embodiment, after the voice data is converted into a binary stream, the voice conversion interface 304 can further adopt an encryption algorithm to perform mathematical transformation on the binary stream, and represent a generated code acquired after the mathematical transformation bit by bit with self-defined reference image symbols to form a converted pattern.

Specifically, the voice conversion interface 304 can be further compiled in a dynamic link library form, and supplies two interfaces to the external, wherein:
The first interface is used for converting the voice data into a binary stream, adopting an encryption algorithm to perform mathematical transformation, and generating a generated code to name the voice file and the corresponding pattern file thereof. The generated code acquired through the encryption algorithm is unique, and thus can uniquely name the voice file and the corresponding pattern file thereof.

The second interface is used for representing the generated code acquired after the mathematical transformation bit by bit with self-defined reference image symbols to form a converted pattern. Since a pattern represents a series of unique encryption algorithm codes, the pattern has the function of an anti-counterfeit label, and relevant product information can be read therefrom via a parsing device.

Wherein the reference image symbols can be determined according to the requirements for practical application, and can be designed by a designer according to an application scenario in connection with the consistent style of a product, which is not limited by the present invention.

In one embodiment, a stripe can be used as a reference image symbol, wherein the stripe has a unique style owing to the color selection and arrangement sequence thereof. In the design of the reference image symbol, when a bit is represented with a stripe, the 0 and 1 in the binary system can be represented with the hop of colors.

In another embodiment, a plane pattern in a specific shape can also act as the reference image symbol. When a bit is represented with a pattern in a specific shape, the 0 and 1 in the binary system can be represented with rotation angles of the pattern relative to a reference point.

Preferably, when the self-defined reference image symbols are used to represent the binary stream bit by bit, the binary stream can be represented in an order from a high bit to a low bit, or from a low bit to a high bit.

Wherein the entry data stored in the database system 305 comprises at least a storage path and user information. In one embodiment, the present invention can be designed as shown in table 1.

It should be understood that the specific order or hierarchy of the steps in the disclosed process is an example of the exemplary method. On the basis of a design preference, it should be understood that the specific order or hierarchy of the steps in the process can be rearranged without departing from the protection scope of the present disclosure. The appended method claims provide the elements of various steps in an exemplary order, but are not intended to be limited to the specific order or hierarchy.

In the above detailed description, various features are combined together in a single embodiment to simplify the present disclosure. The disclosed method should not be interpreted to reflect such an intention, i.e., the embodiment of the claimed subject matter requires more features than the features clearly stated in each claim. On the contrary, as reflected by the appended claims, the present invention is in a state that is less than all the features of the disclosed single embodiment. Therefore, the appended claims are hereby expressly incorporated into the detailed description, wherein each claim is independently used as a separate preferred embodiment of the present invention.

A person skilled in the art should also appreciate that the various illustrative logical blocks, modules, circuits and algorithm steps described in connection with the embodiments herein can be all realized as electronic hardware, computer software or a combination thereof. In order to clearly illustrate the interchangeability between hardware and software, the various illustrative components, blocks, modules, circuits and steps above are all generally described around the functions thereof. Whether the function is realized as hardware or software depends on a specific application and a design constraint condition applied to the entire system. A person skilled in the art may realize the described functions in varying ways for each specific application. However, such realization decisions should not be interpreted to depart from the protection scope of the present disclosure.

The description above comprises examples of one or more embodiments. It is, of course, not possible to describe all possible combinations of components or methods in order to describe the embodiments above. However, an ordinary person skilled in the art should realize that the various embodiments can be further combined and arranged. Therefore, the embodiments described herein are intended to encompass all such changes, modifications and variations in the protection scope of the appended claims. Furthermore, for the term "contain" used in the description or the claims, the coverage mode of the word is similar to that of the term "comprise", just like the interpretation of the "comprise" when used as a transitional word in the claims. Furthermore, any one term "or" used in the claims or the description denotes a "non-exclusive or".

## Claims

1. A method for establishing a personalized association between voice and pattern, **characterized in that**, comprising:
acquiring voice data of a user;
converting the voice data into a pattern and storing the pattern; and
reading the voice data corresponding to a to-be-queried pattern according to a query instruction of the user.

2. The method according to claim 1, **characterized in that**, converting the voice data into a pattern comprises:
converting the voice data into a binary stream; and
representing the binary stream bit by bit with self-defined reference image symbols to form a converted pattern.

3. The method according to claim 2, **characterized in that**:
adopting an encryption algorithm to perform mathematical transformation on the binary stream; and
representing a generated code acquired after the mathematical transformation bit by bit with self-defined reference image symbols to form a converted pattern.

4. The method according to claim 2 or 3, **characterized in that**, utilizing reference image symbols to represent a bit comprises:
when a bit is represented with a stripe, representing 0 and 1 in the binary system with the hop of colors; or
when a bit is represented with a pattern in a specific shape, representing 0 and 1 in the binary system with rotation angles of the pattern relative to a reference point.

5. The method according to claim 1, **characterized in that**, the following functions are executed by a Web cloud server:
storing the acquired voice data in a high capacity cloud storage medium, and transmitting storage path parameters of the voice and the corresponding pattern thereof to a voice conversion interface;
invoking the voice conversion interface to convert the voice into a pattern, and then storing the pattern in the high capacity cloud storage medium;
generating entry data of the voice and the corresponding pattern thereof, and updating the entry data to a database system; and
receiving a query instruction of the user, acquiring the entry data corresponding to the to-be-queried pattern from the database system, and reading the voice data corresponding to the to-be-queried pattern from the high capacity cloud storage medium according to the entry data.

6. A system for establishing a personalized association between voice and pattern, **characterized in that**, comprising a voice acquisition device, a Web cloud server, a high capacity cloud storage medium, a voice conversion interface and a database system, wherein:
the voice acquisition device is used for acquiring voice data of a user;
the Web cloud server is used for storing the acquired voice data in the high capacity cloud storage medium, transmitting storage path parameters of the voice and the corresponding pattern thereof to the voice conversion interface, and updating entry data to the database system;
the voice conversion interface is used for converting the voice into a pattern, and then storing the pattern in the high capacity cloud storage medium; and
the database system is used for storing the entry data of the voice and the corresponding pattern thereof.

7. The system according to claim 6, **characterized in that**:
the voice conversion interface is compiled in a dynamic link library form, and supplies two interfaces to the external, wherein:
a first interface is used for generating unique file names for a voice file and a corresponding pattern file thereof;
a second interface is used for converting the voice data into a binary stream, representing the binary stream bit by bit with self-defined reference image symbols to form a converted pattern, and storing the converted pattern in the high capacity cloud storage medium.

8. The system according to claim 7, **characterized in that**:
the first interface is used for converting the voice data into a binary stream, adopting an encryption algorithm to perform mathematical transformation, and generating a generated code to name the voice file and the corresponding pattern file thereof; and
the second interface is used for representing the generated code acquired after the mathematical transformation bit by bit with self-defined reference image symbols to form a converted pattern.

9. The system according to claim 7 or 8, **characterized in that**, the second interface utilizing reference image symbols to represent a bit comprises:
when a bit is represented with a stripe, representing 0 and 1 in the binary system with the hop of colors; or
when a bit is represented with a pattern in a specific shape, representing 0 and 1 in the binary system with rotation angles of the pattern relative to a reference point.

10. The system according to claim 6, **characterized in that**:
the voice acquisition device adopts a microphone interface provided by an Android system or an iOS system, or adopts a hypertext markup language HTML5 technology to acquire the voice data of the user via a mobile application program; or
the voice acquisition device adopts the HTML5 technology or a Flash technology to acquire the voice data of the user via a webpage terminal.
